# FASCICULE DE BREVET EUROPEEN

(11) **EP 0 508 879 B1**
(45) Date de publication et mention de la délivrance du brevet: **10.07.1996**
(21) Numéro de dépôt: 92400962.4
(22) Date de dépôt: 07.04.1992
(51) Int. Cl.: C08L 27/06, C08L 101/00

(54) **Matériau à base de résines synthétiques, procédé pour sa fabrication et ses utilisations, notamment dans la fabrication d'articles de maroquinerie, de papeterie et de boîtage**
Material auf der Grundlage von synthetischen Harzen, Verfahren zu dessen Herstellung sowie dessen Verwendung, insbesondere zur Herstellung von Leder-, Papier- und Kartonageprodukten
Material based on synthetic resins, process for its preparation and its uses, especially for the manufacture of leather, paper and container products

(30) Priorité: 09.04.1991 FR 9104289
(43) Date de publication de la demande: 14.10.1992
(73) Titulaire: Société anonyme dite: CALANDRAGE INDUSTRIEL FRANCAIS (CIFRA), F-02400 Chateau-Thierry (FR)
(72) Inventeur: Py, Pierre, F-94310 Nogent sur Marne (FR); Meunier, Jacques, F-27500 Manneville sur Risle (FR); Bouquet, Jean-Pierre, F-94170 Le Perreux sur Marne (FR)
(74) Mandataire: Lhuillier, René

(56) Documents cités:
- DE-A- 1 102 387
- DE-A- 2 127 654
- WORLD PATENTS INDEX LATEST Derwent Publications Ltd., London, GB; AN 84-143923
- WORLD PATENTS INDEX LATEST Derwent Publications Ltd., London, GB; AN 89-022743
- WORLD PATENTS INDEX LATEST Derwent Publications Ltd., London, GB; AN 84-249310
- WORLD PATENTS INDEX Derwent Publications Ltd., London, GB; AN 78-09590A

## Description

L'invention a pour objet un nouveau matériau à base de résines synthétiques, destiné entre autres, à la fabrication d'articles de maroquinerie, de papeterie et de boîtage, un procédé pour sa fabrication et ses applications.

Actuellement, les articles à base de matières synthétiques disponibles en maroquinerie, papeterie et boîtage, fabriqués à partir de plaques, sont en général en polypropylène, polyéthylène, et parfois en chlorure de polyvinyle (PVC). Les épaisseurs se situent en général entre 0,3 et 2 mm.

Ces produits, déjà largement employés, présentent toutefois certains inconvénients, en particulier :
- pour les plaques de polypropylène et de polyéthylène, ou celles obtenues par mélange de ces deux polymères, il est nécessaire d'utiliser une épaisseur relativement importante pour obtenir une bonne rigidité des articles finis ;
- ces produits conservent une mémoire élastique, c'est-à-dire ont tendance à reprendre une position initiale ;
- leur impression nécessite la plupart du temps l'utilisation de traitements de surface tels que celui connu sous le nom de procédé CORONA, avant l'impression ;
- leur marquage à chaud, comme leur soudure entre qualités semblables, est malaisé et nécessite des machines spécialement adaptées.

De plus, le toucher de ces produits, de type paraffineux, n'est pas toujours apprécié.

Dans le cas du PVC rigide, peu employé, les inconvénients se trouvent plutôt au niveau de la tenue à la pliure, de la tenue au froid et du toucher sec et cassant.

Il existe donc un besoin de disposer d'un matériau synthétique pouvant être utilisé, à même rigidité, dans des épaisseurs plus faibles, présentant une très bonne tenue aux chocs, sans mémoire, une bonne résistance à la pliure notamment par un rainurage adapté, une excellente imprimabilité et qui puisse être transformé, notamment en produit fini, avec les matériels de type presses, et tout particulièrement avec des machines à souder haute fréquence qui, avec un processus bien adapté, permettent la soudure, la soudure-découpe et le rainurage.

Selon l'invention, il est fourni un matériau synthétique composé en majeure partie de chlorure de polyvinyle (PVC), répondant de façon surprenante et inattendue aux exigences mentionnées ci-dessus.

Ce matériau est caractérisé en ce qu'il est essentiellement constitué de :
A. Un système de résines comprenant :
   - 0 à 95 % en poids de PVC suspension,
   - 0 à 95 % en poids de PVC émulsion,
   - 5 à 25 % en poids d'un sytème constitué d'une
   ou plusieurs résines modifiantes, apte à améliorer la résistance à la pliure, et
   - 0 à 3 % en poids de résine acrylique,
   et
B. Pour 100 g de système de résines A :
   - 0 à 15 g de plastifiant,
   - 0 à 3 g de costabilisant thermique,
   - 1 à 3 g de stabilisant thermique,
   - 0,5 à 4 g d'un système lubrifiant,
   - 0 à 20 g d'une charge minérale,
   - 0 à 5 g d'un système de coloration,
   - 0 à 1 g d'agent anti-radiations ultra-violettes (anti-UV) et
   - 0 à 1 g d'antioxydant.

L'expression "PVC suspension" signifie que le chlorure de polyvinyle utilisé a été obtenu selon un procédé en suspension, bien connu de l'homme du métier.

En tant que PVC suspension utilisable selon l'invention, on peut citer par exemple celui commercialisé sous la référence S 5703 par la société LVM, S 5715 par la société BASF ou S 071 par la société ATOCHEM.

Il présente avantageusement une valeur K (appelée aussi "K-Wert") de 57 à 70, déterminée selon la norme DIN 53 726.

L'expression "PVC émulsion" signifie que le chlorure de polyvinyle utilisé a été obtenu selon un procédé en émulsion, bien connu de l'homme du métier.

En tant que PVC émulsion utilisable selon l'invention, on peut citer par exemple celui commercialisé sous la dénomination SOLVIC® 357 NC par la société SOLVAY, la référence E 600 par la société ATOCHEM ou la référence E 6007 par la société HULS.

Selon l'invention, on a trouvé que certaines résines modifiantes étaient capables, même lorsqu'elles sont ajoutées en des proportions relativement faibles à des compositions à base de PVC, d'améliorer considérablement la résistance à la pliure des matériaux obtenus à partir de ces compositions.

En particulier, le système constitué d'une ou plusieurs résines modifiantes, apte à améliorer la résistance à la pliure, utilisé selon l'invention est avantageusement constitué d'une à trois résines choisies parmi les résines de type acrylonitrile-butadiène, comme par exemple la résine commercialisée sous la dénomination CHEMIGUM® P83, P90 ou P8B1A par la société GOODYEAR, parmi les résines de type polyéthylène chloré, comme par exemple la résine commercialisée sous la dénomination TYRIN® 3615 ou TYRIN® 6000 par la société DOW, et parmi les résines élastomères de type polyester, comme par exemple la résine commercialisée sous la dénomination HYTREL® 55D ou 63 D par la société DU PONT.

En tant que résine acrylique utilisable selon l'invention, on peut citer celle commercialisée sous la dénomination PARALOID® K 120 ND, K 130 ou K 175 par la société ROHM AND HAAS.

Le plastifiant utilisé selon l'invention est avantageusement constitué d'un ester de l'acide phtalique, de l'acide adipique, de l'acide sébacique ou de l'acide trimellitique.

L'ester de l'acide phtalique peut être notamment celui commercialisé sous la dénomination JAYFLEX® DIUP par la société EXXON. L'ester de l'acide trimellitique peut être notamment celui commercialisé sous la dénomination REOMOL® LTM par la société CIBA-GEIGY.

Le costabilisant thermique utilisé selon l'invention est avantageusement constitué d'huile de soja époxydée, d'hexacosa-hydroxydicarbonate de tétraaluminium et de nonamagnésium heptahydraté, ou d'un mélange de ces composés.

L'huile de soja époxydée peut être notamment celle commercialisée sous la dénomination REOPLAST® 39 par la société CIBA-GEIGY ou EDENOL® D 81 par la société HENKEL.

L'hexacosa-hydroxydicarbonate de tétraaluminium et de nonamagnésium heptahydraté est par exemple celui commercialisé sous la dénomination ALCAMITZER® 42 par la société MITSUI TOATSU CHEMICALS.

Le stabilisant thermique est avantageusement constitué d'un composé ou mélange de type octyl-mercaptide d'étain, notamment d'un mélange de tri-(2-éthylhexylmercapto-acétate) de monooctyl-étain et de bis-(2-éthylhexylmercapto-acétate) de di-n-octyl-étain, tel que celui commercialisé sous la dénomination 17 MOKS® par la société CIBA-GEIGY, STANOFIX® A 363 par la société POLYTITAN ou OT 650 par la société HARCROS.

Le système lubrifiant peut être constitué d'un lubrifiant interne, d'un lubrifiant externe ou d'un lubrifiant interne-externe, ou de leurs mélanges.

En tant que lubrifiants internes utilisables selon l'invention, on peut citer les esters de pentaérythritol et d'acides gras à longue chaîne tels que celui commercialisé sous la dénomination CIRE B 216 par la Société BARLOCHER, ou les esters partiels d'acides gras et de glycérol tels que le LOXIOL® G 16 de la société HENKEL.

En tant que lubrifiants externes utilisables selon l'invention, on peut citer les cires de polyéthylène de bas poids moléculaire telles que par exemple la CIRE AC 316 de la société ALLIED CHEMICAL.

En tant que lubrifiants internes-externes utilisables selon l'invention on peut citer les esters d'acides montaniques et d'éthylèneglycol tels que par exemple la CIRE E de la société HOECHST.

La charge minérale utilisée selon l'invention peut être du type carbonate de calcium, talc ou silice.

Le carbonate de calcium peut être celui commercialisé sous la dénomination OMYALITHE® 90 par la société OMYA. Le talc peut être celui commercialisé sous la dénomination TALC 10 MO par la société DUCANCEL. La silice peut être celle commercialisée sous la dénomination FK 310 par la société DEGUSSA.

Le système de coloration utilisé selon l'invention peut être un colorant ou un pigment tel que par exemple de l'oxyde de titane, anatase ou rutile, du noir de carbone, par exemple le noir PVQ 85 de la société CIBA-GEIGY, ou un oxyde métallique couramment utilisé dans la fabrication des plaques de PVC, ou éventuellement un mélange de colorants et/ou de pigments.

En tant qu'agents anti-UV utilisables selon l'invention, on peut citer par exemple le N-(2-éthoxyphényl)-N′-(2-éthylphényl)-éthanediamide tel que le TINUVIN® 312 ou le CHIMASSORB®H, l'un et l'autre de la société CIBA-GEIGY et le N,N′-(2-éthoxyphényl)-oxonilide.

En tant qu'antioxydants utilisables selon l'invention, on peut citer les phénols stériquement cachés ou encombrés, tels que par exemple ceux commercialisés sous les dénominations IRGANOX® 245, 1070 et 1076 par la société CIBA-GEIGY.

Le matériau selon l'invention peut être obtenu par calandrage ou par extrusion-calandrage ("cast-film"), à partir de mélanges des composés de types A et B obtenus par les procédés de mélange à sec bien connus de l'homme du métier et généralement utilisés dans l'industrie de transformation du PVC.

Ce matériau se présente en général sous forme d'une feuille ayant par exemple une épaisseur comprise entre 0,2 et 1,5 mm.

Il peut être grainé selon un procédé couramment utilisé dans l'industrie des feuilles de PVC, par exemple par estampage à chaud entre un cylindre métallique portant un motif en relief ou gravé et un deuxième cylindre de contre-pression.

Selon un mode de réalisation avantageux, les composants du système de résines A et les additifs B sont mélangés dans un dispositif turbo-mélangeur du type de ceux habituellement utilisés pour la réalisation de mélanges à sec du PVC et de ses additifs, le mélange ainsi obtenu est soumis à un processus de calandrage ou de calandrage-extrusion pour obtenir une feuille ayant l'épaisseur désirée, avantageusement une épaisseur comprise entre 0,2 et 1,5 mm, elle est éventuellement grainée à une température préalablement portée à environ 200°C, puis elle est progressivement refroidie jusqu'à la température ambiante par passage sur des cylindres de refroidissement.

Ce refroidissement progressif assure sa stabilité dimensionnelle.

Le matériau ainsi obtenu est stocké, par exemple sous forme de bobines ou de plaques ou feuilles formatées.

Quels que soient son procédé de fabrication et son mode de stockage, le matériau selon l'invention présente, à des épaisseurs moindres, un ensemble de propriétés tel qu'il est globalement supérieur aux matériaux de l'art antérieur connus, destinés aux mêmes applications.

On peut à ce propos indiquer que par rapport aux matériaux à base de polypropylène et/ou de polyéthylène, il présente notamment une meilleure tenue et une plus grande rigidité, il ne présente pas de mémoire (telle que définie plus haut), il est inutile de lui appliquer avant impression des procédés de préparation de la surface tels que le procédé dit CORONA et son marquage à chaud, par exemple au moyen d'une presse à marquer, est très aisé.

Par rapport aux matériaux connus à base de PVC, lorsqu'il subit un rainurage et des pliures, il présente une bonne résistance permettant son utilisation notamment en reliure et pour fabriquer des objets tels que des boîtes, destinés à être fréquemment ouverts et refermés.

De plus, contrairement aux matériaux de l'art antérieur, il présente un toucher agréable, c'est-à-dire non paraffineux, non sec et non cassant.

Le matériau selon l'invention s'imprime sans aucune difficulté, selon les procédés utilisés pour le PVC, et ceci même après un stockage prolongé.

Ce matériau peut être non seulement découpé et rainuré par presse platine mais aussi soudé et découpé-soudé par haute fréquence.

Enfin, tout en présentant les nombreux avantages mentionnés ci-dessus, et d'autres encore, le matériau selon l'invention peut être obtenu à un prix de revient du même ordre de grandeur que celui des matériaux connus jusqu'à présent, destinés à des utilisations similaires.

Ce matériau peut être utilisé notamment pour fabriquer des articles de papeterie ou de maroquinerie tels que par exemple reliures, porte-documents, jaquettes, présentoirs, sacoches publicitaires, boîtes etc..., en particulier lorsqu'il se présente sous forme de bobines ou de plaques ou feuilles formatées.

Il convient toutefois de remarquer que l'on peut également fabriquer des objets à base du matériau selon l'invention par d'autres procédés que ceux décrits ci-dessus, par exemple par thermoformage des feuilles ou plaques obtenues par exemple par calandrage ou calandrage-extrusion de mélanges des composants A et B, ou encore par injection-moulage de tels mélanges.

Les exemples qui suivent sont destinés à illustrer l'invention sans en limiter la portée.

### EXEMPLE 1 :

Dans un dispositif turbo-mélangeur, on mélange intimement :
- 58 % en poids de PVC suspension de type S 5703,
- 27 % en poids de PVC émulsion de type SOLVIC® 357 NC,
- 14 % en poids de CHEMIGUM® P 83 et
- 1 % en poids de résine acrylique de type PARALOID® K 175,
avec, pour 100 g de ce mélange :
- 2,0 g d'huile de soja époxydée de type REOPLAST® 39,
- 0,275 g d'hexacosa-hydroxydicarbonate de tétraaluminium et de nonamagnésium heptahydraté de type ALCAMITZER® 42,
- 1,500 g d'octyl-mercaptide d'étain de type 17 MOKS®,
- 0,700 g d'ester de pentaérythritol de type CIRE B 216,
- 0,100 g de cire de polyéthylène de type AC 316,
- 3,000 g de pigment noir de type PVQ 85,
- 0,410 g de N-(2-éthoxyphényl)-N′-(2-éthylphényl)-éthanediamide ou de N,N′-(2-éthoxyphényl)-oxonilide et
- 0,700 g d'IRGANOX® 1076 en tant que phénol stériquement caché.

On soumet ce mélange à un processus de calandrage au moyen d'une calandre quatre cylindres, pour obtenir une feuille ayant une épaisseur de 0,5 mm, grainée sur la ligne de calandrage.

Le matériau ainsi obtenu est stocké sous forme de feuilles formatées pour être ultérieurement transformé en classeurs, après rainurage-soudage et impression éventuelle.

### EXEMPLE 2 :

Dans un dispositif turbo-mélangeur, on mélange intimement :
- 55 % en poids de PVC suspension de type S 5715,
- 30 % en poids de PVC émulsion de type E 600,
- 13 % en poids de CHEMIGUM® P 90,
- 2 % en poids de PARALOID K 120 ND,
avec, pour 100 g de ce mélange :
- 1,5 g d'huile de soja époxydée de type EDENOL® D 81,
- 1,8 g d'octylmercaptide d'étain,
- 1,0 g de LOXIOL® G 16,
- 0,5 g de CIRE E,
- 3,5 g de titane AT1 de type anatase,
- 0,3 g d'anti-UV et
- 0,5 g d'antioxydant.

Ce mélange est ensuite traité comme à l'exemple 1.

### EXEMPLE 3 :

Dans un dispositif turbo-mélangeur, on mélange intimement :
- 63 % en poids de PVC suspension de type S 071,
- 27 % en poids de PVC émulsion de type E 6007,
- 9 % en poids de TYRIN® 6000,
- 1 % en poids de résine acrylique de type K 130,
avec, pour 100 g de ce mélange :
- 10 g de phtalate de di-isoundécyle de type JAYFLEX® DIUP,
- 3,0 g d'huile de soja époxydée de type EDENOL® D 81,
- 2,2.g d'octyl-mercaptide d'étain de type 17 MOKS®,
- 10 g de charge minérale de type OMYALITHE® 90,
- 3,5 g de titane AT1 de type anatase,
- 0,3 g d'anti-UV et
- 0,5 g d'antioxydant.

Ce mélange est ensuite traité comme à l'exemple 1.

### EXEMPLE 4 :

Dans un dispositif turbo-mélangeur, on mélange intimement :
- 85 % en poids de PVC émulsion de type E 600,
- 8 % en poids de résine acrylonitrile-butadiène de type CHEMIGUM® P 90,
- 4 % en poids d'élastomère polyester de type HYTREL® 63 D et
- 3 % en poids de résine acrylique de type PARALOID® K 120 ND,
avec, pour 100 g de ce mélange :
- 7 g d'ester de l'acide trimellitique de type REOMOL® LTM,
- 1,5 g d'huile de soja époxydée de type REOPLAST® 39,
- 1,8 g d'octylmercaptide d'étain, de type STANOFIX® A 363,
- 1,0 g de LOXIOL® G16,
- 0,5 g de cire E,
- 0,8 g de talc de type TALC 10 MO,
- 3,2 g d'un mélange de pigments et
- 0,4 g d'antioxydant de type IRGANOX® 1070.

Ce mélange est ensuite traité comme à l'exemple 1.

Les feuilles de matériau synthétique selon l'invention, obtenues aux exemples 1 à 4, peuvent être utilisées par exemple pour fabriquer par découpe et rainurage des boîtes légères, rigides et de bonnes tenue et solidité.

## Revendications

1. Matériau synthétique, caractérisé en ce qu'il est essentiellement constitué de :
A. Un système de résines comprenant :
- 0 à 95 % en poids de PVC suspension,
- 0 à 95 % en poids de PVC émulsion,
- 5 à 25 % en poids d'un système constitué d'une ou plusieurs résines modifiantes, apte à améliorer la résistance à la pliure, constitué d'une à trois résines choisies parmi les résines de type acrylonitrile-butadiène, les résines de type polyéthylène chloré et les résines élastomères de type polyester, et
- 0 à 3 % en poids de résine acrylique,
et
B. Pour 100 g de système de résines A :
- 0 à 15 g de plastifiant,
- 0 à 3 g de costabilisant thermique,
- 1 à 3 g de stabilisant thermique,
- 0,5 à 4 g d'un système lubrifiant,
- 0 à 20 g d'une charge minérale,
- 0 à 5 g d'un système de coloration, constitué par un colorant, un pigment ou un mélange de colorants et/ou de pigments,
- 0 à 1 g d'agent anti-radiations ultra-violettes (anti-UV) et
- 0 à 1 g d'antioxydant.

2. Matériau synthétique selon la revendication 1, caractérisé en ce qu'il comprend du PVC suspension et du PVC émulsion.

3. Matériau synthétique selon la revendication 1 ou 2, caractérisé en ce que le plastifiant est constitué d'un ester de l'acide phtalique, de l'acide adipique, de l'acide sébacique ou de l'acide trimellitique.

4. Matériau synthétique selon l'une quelconque des revendications 1 à 3, caractérisé en ce que le costabilisant thermique est constitué d'huile de soja époxydée, d'hexacosa-hydroxydicarbonate de tétraaluminium et de nonamagnésium heptahydraté, ou d'un mélange de ces composés.

5. Matériau synthétique selon l'une quelconque des revendications 1 à 4, caractérisé en ce que le stabilisant thermique est constitué d'un composé ou mélange de type octyl-mercaptide d'étain.

6. Matériau synthétique selon l'une quelconque des revendications 1 à 5, caractérisé en ce que le système lubrifiant est constitué d'un lubrifiant interne, d'un lubrifiant externe, d'un lubrifiant interne-externe ou d'un mélange de tels lubrifiants.

7. Matériau synthétique selon la revendication 6, caractérisé en ce que le lubrifiant interne est un ester de pentaérythritol et d'acide gras à longue chaîne ou un ester partiel d'acide gras et de glycérol.

8. Matériau synthétique selon la revendication 6 ou 7, caractérisé en ce que le lubrifiant externe est une cire de polyéthylène de bas poids moléculaire.

9. Matériau synthétique selon l'une quelconque des revendications 6 à 8, caractérisé en ce que le lubrifiant interne-externe est un ester d'acide montanique et d'éthylène-glycol.

10. Matériau synthétique selon l'une quelconque des revendications 1 à 9, caractérisé en ce que la charge minérale est du type carbonate de calcium, talc ou silice.

11. Matériau synthétique selon l'une quelconque des revendications 1 à 10, caractérisé en ce que l'agent anti-UV est le N-(2-éthoxyphényl)-N'-(2-éthylphényl)éthanediamide ou le N,N'-(2-éthoxyphényl)-oxonilide.

12. Matériau synthétique selon l'une quelconque des revendications 1 à 11, caractérisé en ce que l'antioxydant est un phénol stériquement caché ou encombré.

13. Procédé de fabrication du matériau synthétique selon l'une quelconque des revendications 1 à 12, caractérisé en ce que :
- les composants du système de résines A et les additifs B sont mélangés dans un dispositif turbo-mélangeur,
- le mélange ainsi obtenu est soumis à un processus de calandrage ou de calandrage-extrusion pour obtenir une feuille ayant l'épaisseur désirée,
- la feuille ainsi obtenue est éventuellement grainée à une température préalablement portée à environ 200°C et
- la feuille est ensuite progressivement refroidie jusqu'à la température ambiante par passage sur des cylindres de refroidissement.

14. Utilisation du matériau synthétique selon l'une quelconque des revendications 1 à 12, pour la fabrication d'articles de maroquinerie, de papeterie ou de boîtage.

## Claims

1. Synthetic material, characterized in that it is essentially composed of :
A. A system of resins including :
- 0 to 95% by weight of suspension PVC,
- 0 to 95% by weight of emulsion PVC,
- 5 to 25% by weight of a system formed by one or more modifying resins, which is suitable for improving the folding resistance and composed of one to three resins chosen from among the acrylonitrile-butadiene type resins, the chlorinated polyethylene type resins and the polyester type elastomeric resins, and
- 0 to 3% by weight of acrylic resin,
and
B. Per 100 g of system of resins A :
- 0 to 15 g of plasticizer,
- 0 to 3 g of thermal costabilizer,
- 1 to 3 g of thermal stabilizer,
- 0.5 to 4 g of a lubricating system,
- 0 to 20 g of a mineral filler,
- 0 to 5 g of a colouring system consisting in a colouring agent, a pigment or a mixture of colouring agents and/or of pigments,
- 0 to 1 g of anti-ultraviolet radiation (anti-UV) agent, and
- 0 to 1 g of antioxidant.

2. Synthetic material according to claim 1, characterized in that it comprises suspension PVC and emulsion PVC.

3. Synthetic material according to claim 1 or 2, characterized in that the plasticizer is constituted by a phthalic acid, adipic acid, sebasic acid or trimellitic acid ester.

4. Synthetic material according to any one of claims 1 to 3, characterized in that the thermal costabilizer is constituted by epoxidized soybean oil or heptahydrated tetraaluminium and nonamagnesium hexacosahydroxydicarbonate, or a mixture of these compounds.

5. Synthetic material according to any one of claims 1 to 4, characterized in that the thermal stabilizer is constitued by an octyl-tin mercaptide type compound or mixture.

6. Synthetic material according to any one of claims 1 to 5, characterized in that the lubricating system is constituted by an internal lubricant, an external lubricant, an internal-external lubricant or a mixture of such lubricants.

7. Synthetic material according to claim 6, characterized in that the internal lubricant is a long-chain fatty acid pentaerythritol ester or a fatty acid glycerol partial ester.

8. Synthetic material according to claim 6 or 7, characterized in that the external lubricant is a low molecular weight polyethylene wax.

9. Synthetic material according to any one of claims 6 to 8, characterized in that the internal-external lubricant is a montanic acid ethylene glycol ester.

10. Synthetic material according to any one of claims 1 to 9, characterized in that the mineral filler is of the calcium carbonate, talc or silica type.

11. Synthetic material according to any one of claims 1 to 10, characterized in that the anti-UV agent is N-(2-ethoxyphenyl)-N'-(2-ethylphenyl)-ethane diamide or N,N'-(2-ethoxyphenyl)-oxonilide.

12. Synthetic material according to any one of claims 1 to 11, characterized in that the antioxydant is a sterically "hidden" or hindered phenol.

13. Process for manufacturing the synthetic material according to any one of claims 1 to 12, characterized in that :
- the components of the system of resins A and the additives B are mixed in a turbo-mixing device,
- the mixture thus obtained is subjected to a calendering or calendering and extrusion process to obtain a sheet having the desired thickness,
- the sheet thus obtained is possibly grained at a temperature previously established at about 200°C, and
- the sheet is then gradually cooled down to ambient temperature by being passed over cooling cylinders.

14. Use of the synthetic material according to any one of claims 1 to 12 for the manufacture of fine leatherlike goods, articles of stationery or boxe type.

## Patentansprüche

1. Synthetisches Material, dadurch gekennzeichnet, daß es im wesentlichen zusammengesetzt ist aus:
A. einer Gruppe von Harzen, welche
- 0 bis 95 Gew.-% einer PVC-Suspension,
- 0 bis 95 Gew.-% einer PVC-Emulsion,
- 5 bis 25 Gew.-% einer Gruppe, die aus einem oder mehreren modifizierenden, zur Verbesserung der Widerstandsfähigkeit gegen Faltenbildung befähigten Harzen und aus einem bis drei Harzen, ausgewählt aus Harzen des AcryInitril-Butadientyps, Harzen des chlorierten Polyethylentyps und Elastomerharzen des Polyestertyps zusammengesetzt ist, und
- 0 bis 3 Gew.-% Acrylharz
enthält, sowie
B. bezogen auf 100 g der Gruppe von Harzen unter A, aus:
- 0 bis 15 g eines Weichmachers,
- 0 bis 3 g eines Thermocostabilisators,
- 1 bis 3 g eines Thermostabilisators,
- 0,5 bis 4 g eines Gleitmittelsystems,
- 0 bis 20 g eines mineralischen Füllstoffs,
- 0 bis 5 g eines Farbgebungssystems, gebildet aus einem Farbstoff, einem Pigment oder aus einer Mischung von Farbstoffen und/oder Pigmenten,
- 0 bis 1 g eines UV-Lichtschutzmittels (Anti-UV), und
- 0 bis 1 g eines Oxidationsinhibitors.

2. Synthetisches Material nach Anspruch 1, dadurch gekennzeichnet, daß es eine PVC-Suspension und eine PVC-Emulsion enthält.

3. Synthetisches Material nach Anspruch 1 oder 2, dadurch gekennzeichnet, daß der Weichmacher zusammengesetzt ist aus einem Ester der Phthalsäure, der Adipinsäure, der Sebacinsäure oder der Trimellithsäure.

4. Synthetisches Material nach einem der Ansprüche 1 bis 3, dadurch gekennzeichnet, daß der Thermocostabilisator zusammengesetzt ist aus epoxydiertem Sojaöl, heptahydratisiertem Hexacosahydroxydicarbonat des Tetraaluminiums und des Nonamagnesiums, oder aus einer Mischung beider Verbindungen.

5. Synthetisches Material nach einem der Ansprüche 1 bis 4, dadurch gekennzeichnet, daß der Thermostabilisator zusammengesetzt ist aus einer Verbindung oder Mischung vom Typ des Zinnoctylmercaptids.

6. Synthetisches Material nach einem der Ansprüche 1 bis 5, dadurch gekennzeichnet, daß das Gleitmittelsystem zusammengesetzt ist aus einem internen Gleitmittel, einem externen Gleitmittel, einem intern-externen-Gleitmittel oder einer Mischung solcher Gleitmittel.

7. Synthetisches Material nach Anspruch 6, dadurch gekennzeichnet, daß das interne Gleitmittel ein Ester des Pentaerythrits mit einer langkettigen Fettsäure oder ein partieller Ester einer Fettsäure mit Glycerin ist.

8. Synthetisches Material nach Anspruch 6 oder 7, dadurch gekennzeichnet, daß das externe Gleitmittel ein Wachs aus niedermolekularem Polyethylen ist.

9. Synthetisches Material nach einem der Ansprüche 6 bis 8, dadurch gekennzeichnet, daß das intern-externe Gleitmittel ein Ester der Montansäure mit Ethylenglykol ist.

10. Synthetisches Material nach einem der Ansprüche 1 bis 9, dadurch gekennzeichnet, daß der mineralische Füllstoff vom Typ des Calciumcarbonats, Talkums oder Siliziumdioxide ist.

11. Synthetisches Material nach einem der Ansprüche 1 bis 10, dadurch gekennzeichnet, daß das UV-Lichtschutzmittel N-(2-Ethoxyphenyl)-N'-(2-ethylphenyl)-ethandiamid oder N,N'-(2-Ethoxyphenyl)-oxonilid ist.

12. Synthetisches Material nach einem der Ansprüche 1 bis 11, dadurch gekennzeichnet, daß der Oxidationsinhibitor ein sterisch gehindertes oder abgedecktes Phenol ist.

13. Verfahren zur Herstellung des synthetischen Materials nach einem der Ansprüche 1 bis 12, dadurch gekennzeichnet, daß:
- die Bestandteile aus der Gruppe der Harze A und die Zusatzstoffe B in einem Turbomixer vermischt werden,
- die so erhaltene Mischung einer Kalandrierung oder Kalandrierung-Extrusion unterworfen wird, um eine Folie mit erwünschter Dicke zu erhalten,
- die so erhaltene Folie unter Umständen bei einer zuvor auf ca. 200°C eingestellten Temperatur geprägt wird und
- die Folie schließlich durch Geleiten über Kühlzylinder allmählich bis auf Zimmertemperatur abgekühlt wird.

14. Verwendung des synthetischen Materials nach einem der Ansprüche 1 bis 12 zur Herstellung von Leder-, Papier- und Kartonageprodukten.
